# EUROPÄISCHE PATENTSCHRIFT

(11) **EP 2 049 875 B1**
(45) Veröffentlichungstag und Bekanntmachung des Hinweises auf die Patenterteilung: **09.09.2020**
(21) Anmeldenummer: 07763949.0
(22) Anmeldetag: 18.07.2007
(51) Int. Cl.: G01F 13/00, B65D 47/20

(54) **DOSIERELEMENT MIT EINEM SCHLITZFÖRMIGEN AUSLASS**
METERING ELEMENT HAVING A SLOT-SHAPED OUTLET
DISPOSITIF DE DOSAGE AVEC UNE SORTIE EN FORME DE FENTE

(30) Priorität: 07.08.2006 CH 12582006
(43) Veröffentlichungstag der Anmeldung: 22.04.2009
(73) Patentinhaber: MVM Pack-Holding AG, 4142 Münchenstein (CH)
(72) Erfinder: BOHLER, Lorenz, 4313 Möhlin (CH)
(74) Vertreter: Latscha Schöllhorn Partner AG
(86) Internationale Anmeldenummer: PCT/CH2007/000349
(87) Internationale Veröffentlichungsnummer: WO 2008/017173

(56) Entgegenhaltungen:
- DE-A1- 1 511 979
- US-A- 2 802 608
- US-A- 3 099 372
- US-A- 3 179 301
- US-A- 5 636 772

## Beschreibung

Die Erfindung betrifft ein Dosierelement gemäss den oberbegrifflichen Merkmalen des Anspruchs 1.

Bei der Produktion und Verwendung von Fliess- und Schüttgütern, beispielsweise in der Landwirtschaft, der Baustoffindustrie oder der Chemieindustrie, werden häufig Güter aus Bunkern oder Grossgebinden in kleinere Gebinde umgefüllt oder zur Verwendung oder zum Versand entnommen. Zur Entnahme definierter Mengen, beispielsweise beim Einwiegen immer gleicher Produktmengen, ist es besonders wichtig, den Produktfluss aus dem Gebinde möglichst genau kontrollieren zu können. Im Grossmengenbereich wird der Produktstrom oft mit einfachen Schiebern eingestellt, was vielfach während des Öffnens bzw. Schliessens des Lagerbunkers zu einer unkontrollierten Abgabe führen kann. Eine derartige Dosiervorrichtung mit einer schiebergeregelten Auslassöffnung ist beispielsweise aus der CH 681881 A5 bekannt.

Zur genauen Dosierung kleiner und kleinster Produktmengen, wie z.B. im Laborbereich, ist aus der CH 682 994 A5 eine Dosiervorrichtung in der Art eines Babyschnullers bekannt, bei dem pulver- oder granulatförmige Produkte über einen, durch seitlichen Druck auf die Dosiervorrichtung öffnenden Auslass entnommen werden. Der In US 3 099 372 offenbarte Dispenser verfolgt einen ähnlichen Ansatz: In einer elastischen Grundkörper ist ein Schlitz angeordnet, der durch seitlichen Druck geöffnet werden kann.

Aus DE 15 11 979 A1 ist eine Abgabevorrichtung für Tabletten oder Körner bekannt. Diese Abgabevorrichtung ist jedoch nicht für die kontrollierte Abgabe von fliessfähigen Substanzen geeignet.

Aus US 2 802 602 sind Ventile für Spender wie beispielsweise Zahnpasta und Rasiercreme bekannt. An diese Spender werden keine grossen Anforderungen an die Genauigkeit der ausgetragenen Substanzmenge gestellt.

Aus US 5 636 772 ist ein Flüssigkeitsbehälter bekannt, der einen Hohlraum und eine an den Hohlraum angeformte Verengung aufweist. In der Verengung ist eine Dichtung angeordnet. Zum Entleeren des im Hohlraum befindlichen Fluids muss die Dichtung gebrochen werden und das Fluid kann austreten. Es bestehen nur beschränkte Möglichkeiten die Menge des austretenden Fluids zu steuern.
Bei der erstgenannten Dosiervorrichtung ist die Steuerbarkeit der ausfliessenden Produktmenge als nachteilig anzusehen, was einen Einsatz der Vorrichtung für die Klein- bzw. Kleinstmengendosierung ungeeignet macht. Die zweitgenannte Vorrichtung hingegen ist nur für die Abgabe kleinster Mengen sinnvoll verwendbar und praktikabel. Grund hierfür ist die relativ kleine Auslassöffnung, bei der ausserdem im gedrückten Zustand im Verhältnis zur Grösse der Dosiervorrichtung der elastische Grundkörper stark verformt werden muss. Im Verhältnis zur Gesamtfläche der Dosiervorrichtung wird dadurch trotzdem nur eine sehr geringe Durchflussmenge erreicht. Das Problem der sog. Brückenbildung, das bei der Bunkerlagerung von Schütt- und Fliessgütern auftritt, lösen beide Vorrichtungen durch den Einsatz von Aktuatoren, die hierzu im Bereich der Auslassöffnung oder darüber eingebaut werden müssen.

Aufgabe der vorliegenden Erfindung ist es daher, ein Dosierelement zu schaffen, das bei einfacher Bauweise einen grösseren Durchfluss ermöglicht.

Diese Aufgabe wird durch ein Dosierelement mit den Merkmalen des Anspruchs 1 gelöst. Weitere bevorzugte Ausführungsformen der Erfindung sind Bestandteil der abhängigen Ansprüche.

Die vorliegende Erfindung sieht ein Dosierelement für Fliess- und Schüttgüter vor, das in einem verformbaren, insbesondere elastischen Grundkörper eine runde Einlassöffnung und einen durch seitlichen Druck variabel erweiterbaren, schlitzförmigen Auslass aufweist. Auf der der Einlassöffnung gegenüberliegenden Seite des Dosierelements ist eine weitgehend ovale Fläche (welche im Extremfall jedoch auch kreisrund sein kann) vorgesehen. Diese Fläche weist einen schlitzförmigen Auslass auf, der in der (grössten) Längsachse der ovalen Fläche ausgerichtet ist. Erfindungsgemäß weist der schlitzförmige Auslass eine Länge auf, die grösser ist als der Innendurchmesser der Einlassöffnung. Dadurch wird erreicht, dass nach Beaufschlagung des Umfangs der ovalen Fläche mit seitlichem Druck, die daraus resultierende Öffnung des Auslassschlitzes nahezu flächengleich mit der Einlassöffnung wird und so ein Schüttgut, beispielsweise ein pulver- oder granulatförmiges Produkt, das Dosierelement nahezu ungehindert durchfliessen kann.

Bevorzugt wird zum Erweitern des schlitzförmigen Auslasses seitlich Druck auf das Dosierelement aufgebracht. Dabei wird die beste Öffnungswirkung erreicht, wenn der Druck im Bereich der Umfangspunkte der Längsachse der ovalen Fläche aufgebracht wird. Dabei ist vorgesehen, diesen Druck manuell aufzubringen. Es ist jedoch auch möglich, das erfindungsgemässe Dosierelement in einem fernsteuerbaren System einzusetzen, wobei die Steuerung des Dosierelements dann automatisiert abläuft. Zur Steuerung des Durchflusses sind alle Arten mechanischer Aktuatoren, beispielsweise fluidische Aktoren oder Aktoren aus einer Formgedächtnislegierung denkbar.

Je nach Dosieraufgabe sind zwei Betriebsweisen zur Auslasssteuerung möglich. Wenn die Priorität auf permanenter Produktzuführung liegt, ist es möglich, das Dosierelement ständig mit erweitertem Auslassschlitz (Offenstellung) zu verwenden. In diesem Fall ist es sinnvoll, den obengenannten Bereich der Umfangspunkte der Längsachse der ovalen Fläche mit Druck, beispielsweise durch Klemmen, zu beaufschlagen. Diese Klemmen können durch einen entsprechenden Fluid-Aktor oder einen pneumatischen Aktor entspannt werden falls, der Produktfluss, beispielsweise im Störfall oder bei Produktionsumstellung, unterbrochen werden soll.

In der zweiten Betriebsweise wird nur in bestimmten Produktionsphasen, wie beispielsweise in Fütterungsautomaten, nur auf Abruf, das Beimischen bzw. die Ausgabe der Fliess- oder Schüttgüter aus dem Vorratsbunker vorgesehen. Der schlitzförmige Auslass wird also überwiegend drucklos (Schliessposition) gehalten. Im Bedarfsfall kann Druck durch Aktivierung von Druckelementen, die an den gleichen Punkten, wie im ersten Fall beschrieben, angreifen, beaufschlagt werden. Hierzu können beispielsweise pneumatische Spannzylinder oder Parallelflächengreifer eingesetzt werden. Durch den Einsatz von Steuerungselementen kann zudem eine schrittweise Steuerung des beaufschlagten Druckes und somit des Durchflusses des zu dosierenden Gutes in voll- oder teilautomatisierten Systemen erreicht werden.

Um die Rückführung der erweiterten Auslassöffnung zu unterstützen, ist bevorzugt eine aktive Rückstellvorrichtung vorgesehen, die beispielsweise federunterstützt in das Dosierelement hineinragt oder in diesem integriert wird. Darüber hinaus ist es möglich, entsprechende Rückstellungsvorrichtungen wie z.B. Spiralfedern oder ein- oder aufvulkanisierte Streifen aus einer Formgedächtnislegierung am oder im Dosierelement anzubringen. Ausserdem kann auch die Umfangswand des verformbaren Grundkörpers als druckbeaufschlagbarer Schlauch aufgebaut sein und nach Aufblasen mit Druckluft, eine entsprechende Rückstellung der erweiterten Auslassöffnung bewirkt werden.

Da die Öffnungsfläche des schlitzförmigen Auslasses im erweiterten Zustand im wesentlichen der Fläche der Einlassöffnung entspricht, wird ein nahezu ungehinderter Durchfluss des zu dosierenden Produktes erreicht. Dadurch wird die Verwendung spezieller Aktoren zur Verhinderung bzw. dem Aufbrechen von Brücken praktisch überflüssig. Sollten dennoch Materialauflagerungen im Bereich des Dosierelements auftreten, können diese durch die verformbare Ausführung des Dosierelements durch Druck manuell entfernt werden.

Um die Dosierung von Produkten in einem geschlossenen System zu ermöglichen, wird das Dosierelement als Muffe ausgebildet, die zwei Behältnisse miteinander verbindet. Das Dosierelement wird dabei bevorzugt in der Art eines Kegelstumpfes geformt, der sich ausgehend von der runden Einlassöffnung, zur ovalen Fläche mit der schlitzförmigen Auslassöffnung hin glockenförmig aufweitet. Dabei ist die Verbindung von Schläuchen besonders bevorzugt, da durch das Dosierelement der Stofftransport hierbei besonders gut gesteuert werden kann. Die Umfangswand des Dosierelements weist dabei bevorzugt Aufnahmen, wie beispielsweise umlaufende Nuten auf, die über die Ränder der Behältnisse gestülpt sind und die Behälter so mit dem Dosierelement verbinden. Die Verbindung erfolgt insbesondere durch Aufstecken oder Überziehen über die Behälterränder. Zusätzlich ist auch das Stülpen des gesamten Behältnisses, insbesondere von Schläuchen, über das Dosierelement denkbar. Ein entsprechender Schlauch kann dann auch direkt mit dem Vorratsbehältnis, an dem das Dosierelement betrieben werden soll, angeschlossen werden, um somit ein geschlossenes System zu bilden. Eine dauerhaftere Verbindung von Behältern, wie beispielsweise von Vorratsbunkern und/oder Schläuchen mit dem erfindungsgemässen Dosierelement, kann insbesondere durch Aufvulkanisieren oder Verkleben geschaffen werden.

Als besonders vorteilhaft erweist sich das Anordnen des Dosierelements im Innern eines Schlauches, der beispielsweise während des Vorgangs des Umverteilens von Produkten aus grossen Gebinden in kleinere Behältnisse verwendet wird. Dieser Schlauch, mit dem darin angeordneten Dosierelement, kann dabei dauerhaft mit dem grösseren Behälter verbunden und sein freies Ende in die zu befüllenden Behältnis eingeführt werden. Durch Beaufschlagung des Dosierelements mit Druck, kann dann das entsprechende Produkt nach Aufweitung des Auslassschlitzes in die kleineren Gebinde zugeteilt werden.

In den beiden obengenannten Fällen der Verwendung des erfindungsgemässen Dosierelementes mit einem Schlauch, ist es möglich, den Schlauch an seinem vom Dosierelement abgewandten Ende durch Klemmen zu verschliessen, bzw. zuzuhalten. Um einen möglichst einfachen Schlauchverschluss zu erreichen, ist die Verwendung von Magnetpartikelstreifen am äussersten Schlauchende empfehlenswert. Durch diese Magnetpartikelstreifen wird ein fast selbsttätiges Verschliessen des Schlauches nach dem Dosiervorgang erreicht.
Die genannten, an einem über das erfindungsgemässe Dosierelement gestülpten oder mit diesem verschweissten Schlauch angeordneten Klemm-, Halte- und/oder Verschlussmittel bieten zusätzlich den Vorteil, dass durch das Verschliessen des Schlauches Substanzen, die u.U. an der Schlauchinnenseite und/oder der Unterseite des Dosierelementes anhaften, herabfallen oder -rieseln und dadurch die Umgebung der Dosier- bzw. Abfüllstelle kontaminieren, im verschlossenen Schlauch aufgefangen und zurückgehalten werden.

Bevorzugt besteht das Dosierelement aus einem auf Gummi oder Silikon basierenden Material. Dadurch wird die kostengünstige Herstellung des Dosierelements aus einem Stück möglich. Die Verwendung eines elastischen Materials bewirkt, dass das Dosierelement nach Aufhebung des Druckes, der zum Öffnen und Erweitern der Auslassöffnung aufgebracht wurde, auch ohne die Verwendung von Rückstellvorrichtungen wieder in die Ausgangsposition zurückgeführt wird und der schlitzförmige Auslass den Durchfluss des zu dosierenden Produktes unterbricht. Um besonders dauerhafte Dosierelemente zu schaffen, empfiehlt sich insbesondere die Verwendung von Materialien mit Gewebeverstärkung. Selbstverständlich ist es auch möglich, zur Formstabilisierung für das Dosierelement und zur Unterstützung der Rückstellung nach dem Aufweiten, die obengenannte Gewebeverstärkung im Dosierelement oder die zusätzlich auf das gefertigte Werkstück aufvulkanisierten Elemente aus einer Formgedächtnislegierung (mit sog. Memory-Effekt) zu bilden.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht massstabsgetreuen Zeichnung. Es zeigen:
- Fig. 1a: die Draufsicht eines nicht druckbeaufschlagten Dosierelements,
- Fig. 1b: die Draufsicht des druckbeaufschlagten Dosierelements aus Fig. 1a,
- Fig. 2: eine Perspektivansicht des erfindungsgemässen Dosierelements, und
- Fig. 3: ein Ausführungsbeispiel mit dem Dosierelement als Verbindungsmuffe zwischen zwei übereinander angeordneten Behältnissen.

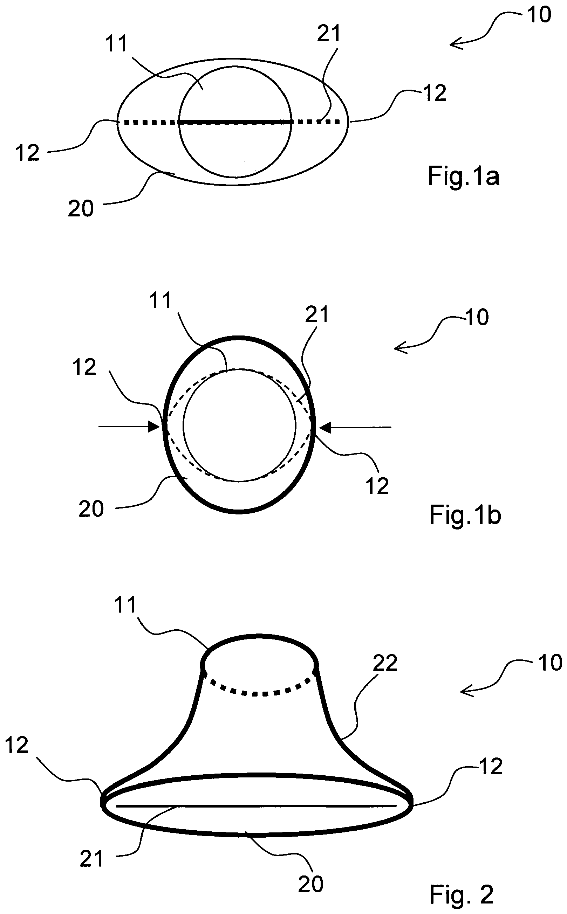

Fig. 1a zeigt ein erfindungsgemässes Dosierelement 10 in Draufsicht. Durch die hier obere, runde Einlassöffnung 11 ist ein mittlerer Abschnitt der durch die glockenförmig aufgeweitete Umfangswand 22 (vgl. Fig.2) des Dosierelements 10 teilweise verdeckten Auslassöffnung 21 sichtbar. Diese ist an der (grössten) Längsachse der elliptischen oder ovalen Fläche 20 ausgerichtet. Die schlitzförmige Auslassöffnung 21 ist im in Fig. 1a gezeigten Ausführungsbeispiel als Einschnitt in der ovalen Fläche 20 vorgesehen, der dadurch nahezu die gesamte ovale Fläche 20 teilt. Lediglich in der Nähe des Umfangs bleibt die ovale Fläche 20 ungetrennt.

Da das Dosierelement 10 an den Umfangspunkten 12 der Längsachse der ovalen Fläche 20 hier noch nicht mit Druck beaufschlagt ist, wird die ovale Form der Fläche 20 auf der von der Einlassöffnung 11 abgewandten Seite des Dosierelements 10 deutlich. Auch ist gut zu erkennen, dass der Auslass 21 dicht verschlossen ist, so dass bei Verwendung des Dosierelements 10 zum Dosieren von beispielsweise Schüttgut, in dieser Position kein Materialfluss stattfinden kann. In Fig. 1b ist das gleiche Dosierelement 10 wie in Fig. 1a dargestellt, allerdings sind hier die Umfangspunkte 12 der Längsachse der ovalen Fläche 20 mit Druck beaufschlagt (durch gegenläufige Pfeile auf beiden Seiten der ovalen Fläche 20 verdeutlicht).

Aus Fig. 1b wird ersichtlich, dass die Druckbeaufschlagung an den Umfangspunkten 12 eine Verformung der ovalen Fläche 20 des Dosierelements 10 bewirkt, so dass diese auch an der Unterseite eine nahezu runde Form, ähnlich der Einlassöffnung 11, annimmt. Durch die Druckbeaufschlagung auf die Umfangspunkte 12 wird gleichzeitig mit der Verformung der ovalen Fläche 20 zu einer etwa runden Fläche die Erweiterung des schlitzförmigen Auslasses 21 erzwungen. Wie aus Fig. 1b erkennbar, nimmt dieser im Laufe der Aufweitung nun seinerseits eine nahezu ovale Form an. Die vom Auslass 21 frei gegebene Fläche entspricht im grösstmöglichen Kompressionszustand des Dosierelements 10 etwa der Fläche der Einlassöffnung 11. Das zu dosierenden Material kann so das Dosierelement 10 nahezu ungehindert passieren. Wird das Dosierelement 10 beispielsweise zur Dosierung von rieselfähigen Baustoffen, die zur Brückenbildung neigen, verwendet, werden diese Gebilde durch den raschen Durchfluss einer grossen Materialmenge aufgebrochen bzw. diese Gebilde gar nicht erst aufgebaut. Der bei herkömmlichen Dosiervorrichtungen übliche Einbau spezieller Aktoren zum Aufbrechen kann bei Verwendung des erfindungsgemässen Dosierelements 10 somit meist unterbleiben.

Fig.2 zeigt eine Perspektivansicht des erfindungsgemässen Dosierelements 10. Aus dieser Darstellung wird ersichtlich, dass die Umfangswand 22 des Dosierelements 10, die sich von der runden Einlassöffnung 11 zur ovalen Fläche 20 mit dem schlitzförmigen Auslass 21 hin erstreckt, glockenförmig aufgeweitet ist. Das Dosierelement 10 hat somit die Form eines Kegelstumpfes mit elliptischer bzw. ovaler Grundfläche.

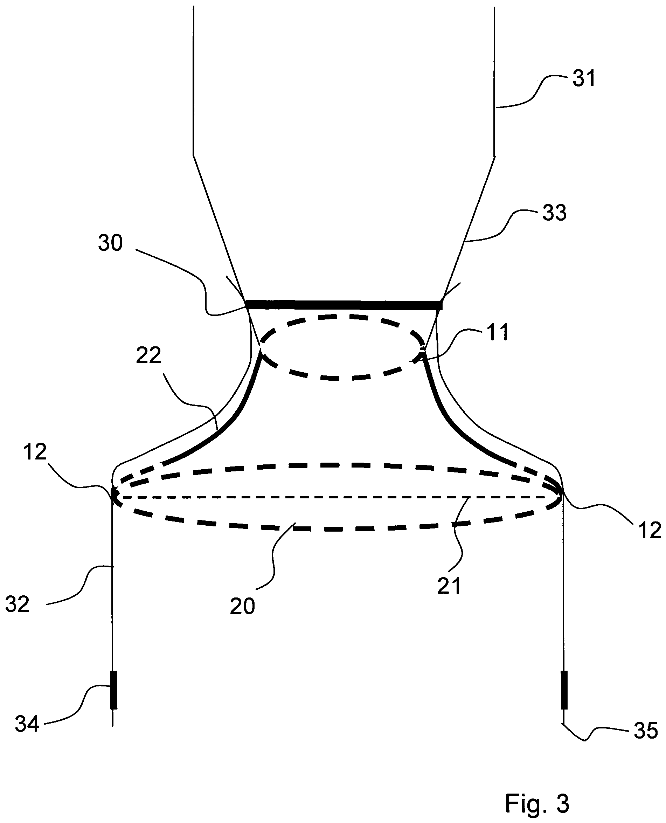

Fig. 3 zeigt ein Ausführungsbeispiel, bei dem das Dosierelement 10 mit zwei Behältnissen 31, 32 verwendet wird. Bei einem der Behältnisse handelt es sich im Ausführungsbeispiel der Fig. 3 um einen Schüttgut-Vorratsbunker 31, an dessen Auslassstutzen 33 das Dosierelement 10 durch Aufstecken lösbar angeordnet ist. Über das Dosierelement 10 ist das zweite Behältnis, ein Schlauch 32, geführt, so dass die ovale Fläche 20 (und damit der schlitzförmige Auslass 21) im Inneren des Schlauches 32 angeordnet sind. Der Schlauch 32 wird über ein Klemmmittel 30, im Ausführungsbeispiel ein Stahlband, am Auslassstutzen 33 des Schüttgut-Vorratsbunkers 31 gehalten. Durch Druck auf die Umfangspunkte 12 kann der Auslass 21 des Dosierelementes 10 variabel aufgeweitet und das Schüttgut so dosiert werden. Der Durchfluss des entsprechenden Gutes kann dabei durch Verringerung bzw. Verstärkung des Druckes auf die Umfangspunkte 12 gesteuert werden. Der gesamte Dosiervorgang erfolgt somit in einem geschlossenen System, eine Kontamination der Umgebung bzw. des Dosierplatzes wird also weitestgehend vermieden. Zusätzlich weist im Ausführungsbeispiel der Fig. 3 der Schlauch 32 im Bereich der vom Dosierelement 10 abgewandten Schlauchendes 35 Verschlussmittel 34 auf. Im Ausführungsbeispiel handelt es sich hierbei um Magnetpartikelstreifen, durch die ein einfacher, schneller, weitgehend selbsttätiger und stabiler Verschluss des Schlauches 32 und damit ein weiterer Schutz vor austretenden, kontaminierenden Substanzen, die in der Umgebung der schlitzförmigen Auslassöffnung 21 des Dosierelementes 10 anhaften, erreicht wird.

## Patentansprüche

1. Dosierelement (10) für Fliess- und Schüttgüter, in einem verformbaren, insbesondere elastischen Grundkörper, mit einer runden Einlassöffnung (11) und einem durch seitlichen Druck variabel erweiterbaren, schlitzförmigen Auslass (21),
**dadurch gekennzeichnet, dass**
auf der der Einlassöffnung (11) gegenüberliegenden Seite eine ovale Fläche (20), welche im Extremfall jedoch auch kreisrund sein kann, vorgesehen ist, wobei
der schlitzförmige Auslass (21) in der Längsachse der ovalen Fläche (20) ausgerichtet ist, und
die Länge des schlitzförmigen Auslasses (21) grösser ist als der Innendurchmesser der Einlassöffnung (11), sodass nach Beaufschlagung der ovalen Fläche (20) mit seitlichem Druck die daraus resultierende Öffnung des Auslasses (21) nahezu flächengleich mit der Einlassöffnung (11) ist.

2. Dosierelement (10) nach Anspruch 1, **dadurch gekennzeichnet, dass** der schlitzförmige Auslass (21) durch seitlichen Druck im Bereich von Umfangspunkten (12) an der Längsachse der ovalen Fläche (20) variabel erweiterbar ist.

3. Dosierelement (10) nach Anspruch 1 oder 2, **dadurch gekennzeichnet, dass** eine Umfangswand (22) des Dosierelements (10) dazu ausgebildet ist, mit den Behältnissen (31, 32) verbunden, insbesondere aufgesteckt und/oder aufvulkanisiert, zu werden.

4. Dosierelement (10) nach einem der vorhergehenden Ansprüche, **dadurch gekennzeichnet, dass** das Dosierelement (10) dazu ausgebildet ist, im Inneren eines, insbesondere schlauchförmigen Behälters angeordnet zu werden.

5. Dosierelement (10) nach einem der vorhergehenden Ansprüche, **dadurch gekennzeichnet, dass** das Dosierelement (10) aus einem auf Gummi oder Silikon basierenden, insbesondere gewebeverstärkten Material gefertigt ist.

6. Dosierelement (10) nach einem der vorhergehenden Ansprüche, **dadurch gekennzeichnet, dass** der Auslass (21) eine, insbesondere federunterstützte, aktive Rückstellungs-Vorrichtung aufweist.

## Claims

1. Metering element (10) for flowable and pourable bulk materials, in a deformable, in particular resilient main body, which element comprises a round inlet opening (11) and a slot-shaped outlet (21) which can be variably expanded by lateral pressure, **characterized in that**, on the side opposite the inlet opening (11), an oval surface (20) is provided which in extreme cases can also be circular, the slot-shaped outlet (21) being oriented in the longitudinal axis of the oval surface (20), and the length of the slot-shaped outlet (21) being greater than the inner diameter of the inlet opening (11) such that, after the oval surface (20) has been subjected to lateral pressure, the resulting opening of the outlet (21) is essentially equal in area to the inlet opening (11).

2. Metering element (10) according to claim 1, **characterized in that** the slot-shaped outlet (21) can be variably expanded by lateral pressure in the region of circumferential points (12) on the longitudinal axis of the oval surface (20).

3. Metering element (10) according to either claim 1 or claim 2, **characterized in that** a circumferential wall (22) of the metering element (10) is designed to be connected to, in particular to be plugged onto and/or vulcanized onto, the receptacles (31, 32).

4. Metering element (10) according to any of the preceding claims, **characterized in that** the metering element (10) is designed to be arranged inside a container, in particular a tubular container.

5. Metering element (10) according to any of the preceding claims, **characterized in that** the metering element (10) is made of a material, in particular fabric-reinforced material, based on rubber or silicone.

6. Metering element (10) according to any of the preceding claims, **characterized in that** the outlet (21) has an active reset device, in particular a spring-assisted active reset device.

## Revendications

1. Élément doseur (10) destiné à des produits coulants et en vrac, dans un corps de base déformable, en particulier élastique, comportant une ouverture d'admission ronde (11) et une évacuation en forme de fente (21) pouvant être élargie de manière variable par pression latérale,
**caractérisé**
**en ce qu'**une surface ovale (20), qui peut également être circulaire dans des cas extrêmes, est prévue sur le côté opposé à l'ouverture d'admission (11),
l'évacuation en forme de fente (21) étant orientée dans l'axe longitudinal de la surface ovale (20), et
la longueur de l'évacuation en forme de fente (21) étant plus élevée que le diamètre interne de l'ouverture d'admission (11), de sorte qu'après que la surface ovale (20) a été soumise à une pression latérale, l'ouverture résultante de l'évacuation (21) possède une surface presque identique à celle de l'ouverture d'admission (11).

2. Élément doseur (10) selon la revendication 1, **caractérisé en ce que** l'évacuation en forme de fente (21) peut être élargie de manière variable par pression latérale au niveau de points circonférentiels (12) sur l'axe longitudinal de la surface ovale (20).

3. Élément doseur (10) selon la revendication 1 ou 2, **caractérisé en ce qu'**une paroi circonférentielle (22) de l'élément doseur (10) est conçue pour être reliée aux récipients (31, 32), en particulier pour être enfichée et/ou vulcanisée.

4. Élément doseur (10) selon l'une des revendications précédentes, **caractérisé en ce que** l'élément doseur (10) est conçu pour être disposé à l'intérieur d'un contenant, en particulier tubulaire.

5. Élément doseur (10) selon l'une des revendications précédentes, **caractérisé en ce que** l'élément doseur (10) est fabriqué à partir d'un matériau à base de caoutchouc ou de silicone, en particulier renforcé par un tissu.

6. Élément doseur (10) selon l'une des revendications précédentes, **caractérisé en ce que** l'évacuation (21) présente un dispositif de rappel actif, en particulier assisté par ressort.
